Europäisches Patentamt

European Patent Office

Office européen des brevets

(11) Numéro de publication: **0 399 855**
**A1**

## (12) DEMANDE DE BREVET EUROPEEN

(21) Numéro de dépôt: **90400799.4**

(22) Date de dépôt: **23.03.90**

(51) Int. Cl.⁵: **F16D 23/14**

(30) Priorité: **18.04.89 FR 8905098**

(43) Date de publication de la demande:
**28.11.90 Bulletin 90/48**

(84) Etats contractants désignés:
**DE ES GB IT SE**

(71) Demandeur: **S.N.R. ROULEMENTS**
**Boîte Postale 17 1, rue des Usines**
**F-74010 Annecy Cédex(FR)**

(72) Inventeur: **Mermoud, Gérard**
**28, Route des Vieux Rotets**
**F-74330 La Balme de Sillingy(FR)**

(74) Mandataire: **Ernst-Schonberg, Michel**
**R.N.U.R. S. 0804 B.P. 103 8 & 10, avenue**
**Emile-Zola**
**F-92109 Boulogne Billancourt(FR)**

(54) **Dispositif de serrage d'un roulement de butée d'embrayage sur un support coulissant.**

(57) Dispositif de serrage d'un roulement (1) de butée sur un support coulissant (9) guidé, qui comporte une agrafe (5a, 5b) de retenue de la bague (3) fixe du roulement, engagée dans l'échancrure d'une collerette radiale (11) du support (2), caractérisé par le fait que la collerette (11) porte une fente (18) radiale à bords convengents de réception d'un ergot (20) formé sur une languette de l'agrafe en contact avec ladite collerette.

FIG 3

FIG 1

## Dispositif de serrage d'un roulement de butée sur un support coulissant

L'invention concerne un dispositif de serrage d'un roulement de butée sur un support coulissant guidé, déplaçable axialement dans le sens de commande d'un mécanisme d'embrayage.

L'invention concerne plus particulièrement un dispositif de serrage de la bague non tournante du roulement qui confère à la bague une certaine liberté radiale accompagnée d'un serrage élastique de maintien de la bague en appui axial glissant sur son support.

La publication FR-A-2470898 décrit un tel dispositif appliquée à une butée autocentreuse dont le support comporte des logements d'encastrement des dispositifs.

Ces butées nécessitent un jeu de montage des dispositifs dont la présence occasionne des vibrations consécutives aux déplacements omnidirectionnels du roulement.

L'invention a pour objet de remédier à l'inconvénient précité et concerne plus particulièrement une disposition nouvelle des dispositifs de serrage du roulement sur son support exempt de vibrations au cours du fonctionnement de la butée.

L'invention s'applique plus particulièrement à une butée de débrayage dans laquelle la bague fixe du roulement est retenue contre une collerette radiale du support de butée au moyen du dispositif de serrage.

Selon l'invention, la collerette porte une fente radiale à bords convergents pour la réception d'un ergot formé sur la languette d'une agrafe au contact de ladite collerette.

Il est en outre prévu que l'agrafe présente des surfaces d'appui d'une fourchette de débrayage de sorte que le support coulissant soit protégé de tout contact d'usure au contact de ladite fourchette. Le support pourra ainsi être obtenu par moulage d'une matière plastique sans nécessiter aucun usinage spécifique à l'amélioration du fonctionnement de la butée.

D'autres caractéristiques et avantages de l'invention apparaîtront à la lecture de l'exemple de réalisation de celle-ci, décrit en se référant au dessin annexé, dans lequel :

- la figure 1 est une vue en coupe axiale de la butée portant le dispositif de serrage conforme à l'invention,

- la figure 2 est une vue de dos de la butée suivant la flèche F de la figure 1,

- la figure 3 est une vue de dos du support du roulement,

- les figures 4 et 5 sont des vues en perspective des deux types d'agrafes du dispositif de serrage,

- la figure 6 est une vue en coupe axiale de la butée montée à coulissement sur un arbre support sous l'action d'une fourchette de commande.

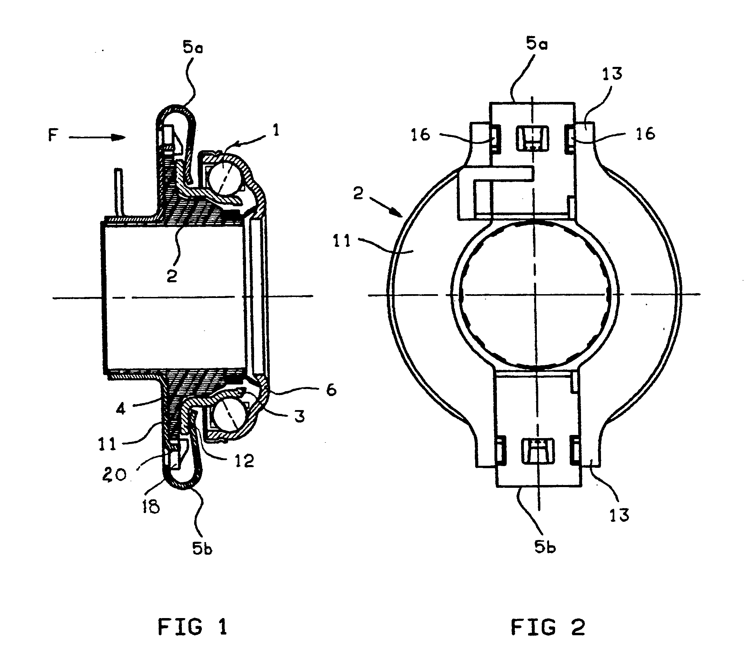

La butée d'embrayage représentée aux figures 1, 2 et 6 comporte essentiellement un roulement désigné par 1 dans son ensemble, à bagues en tôle emboutie et billes à contact oblique, et un support désigné par 2 dans son ensemble, sur lequel l'une des bagues 3 fixe du roulement est montée avec une certaine liberté radiale en 4, et maintenue axialement par l'intermédiaire d'agrafes élastiques 5a, 5b, l'autre bague 6 du roulement étant libre de tourner et présentant une surface frontale destinée à coopérer avec un organe d'actionnement de l'embrayage, tel qu'un diaphragme non représenté.

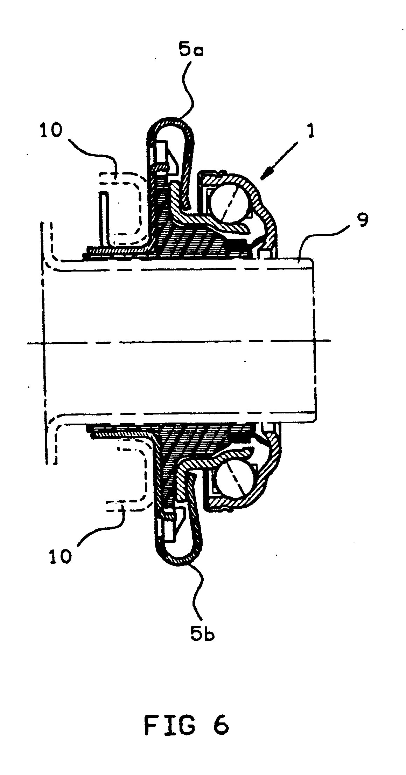

Ainsi qu'il est usuel, le support 2 est destiné à être monté à coulissement sur un tube guide représenté en 9 en trait mixte à la figure 6, et à subir des déplacements axiaux sur ce dernier aux fins de débrayage et embrayage, commandés par l'intermédiaire d'une fourchette dont les doigts sont représentés en 10 en trait mixte à la figure 6.

Le support 2, ici en matière synthétique moulée, présente une collerette radiale 11 dont la face avant sert de surface d'appui axial glissant à une collerette 12 formant partie de la bague 3. La collerette 11 du support présente à sa périphérie deux oreilles opposées 13 et sur lesquelles sont engagées les deux agrafes métalliques 5a, 5b, clipsées chacune sur deux ergots de retenue 16 et constituant les surfaces de coopération de la butée avec les doigts de fourchette 10.

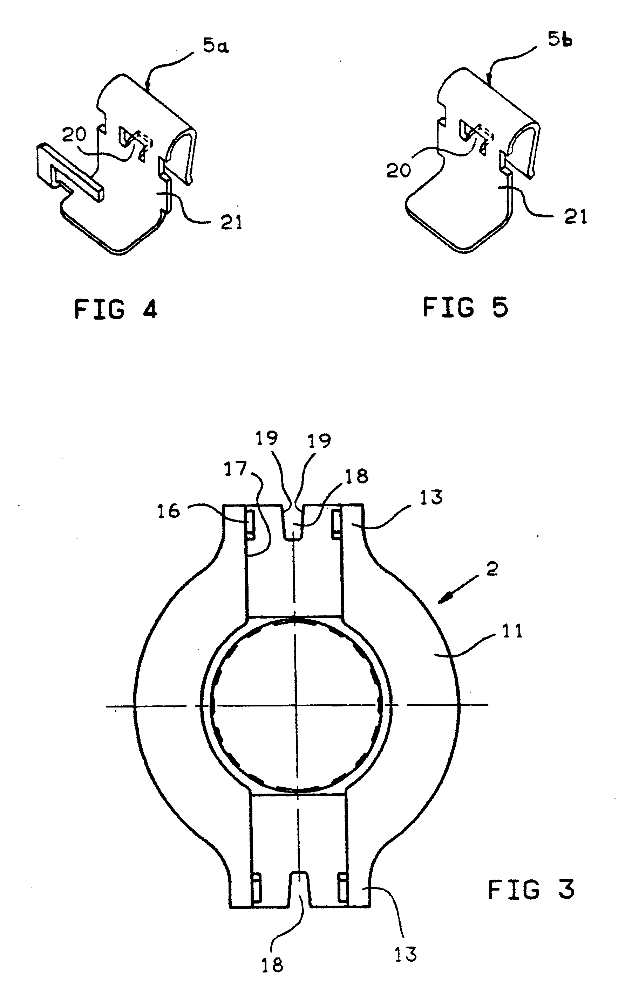

Chaque agrafe constitue une pince telle que représentée aux figures 4 et 5 et exerce l'effort de serrage sur la collerette 11 du support 2 et sur la collerette 12 de la bague fixe 3.

A cet effet, chaque agrafe est engagée entre les bords d'une échancrure 17 prévue sur l'oreille correspondante de la collerette 11.

Selon l'invention, la collerette 11 possède sur chacune de ses oreilles 13, une fente radiale 18 qui débouche à la périphérie de la collerette.

Les bords convergents 19 de la fente 18 immobilisent un ergot 20 porté par une languette 21 de l'agrafe. L'ergot 20 est avantageusement réalisé par poinçonnage de la languette 21 avant formation de la pince par pliage.

L'agencement de la fente 19 autorise, par ailleurs, un montage radial de l'agrafe et l'introduction progressive de l'ergot 20 entre les bords de la fente 18 jusqu'à l'obtention d'un contact latéral localisé entre l'ergot 20 et le support 2, suffisant à s'opposer à tout déplacement indésirable de l'agrafe par rapport au support 2 ou au roulement en cours de fonctionnement de la butée de débrayage.

## Revendications

1 / Dispositif de serrage d'un roulement (1) de butée sur un support coulissant (2) guidé qui comporte une agrafe (5a, 5b) de retenue de la bague (3) fixe du roulement, engagée dans l'échancrure d'une collerette radiale (11) du support (2), caractérisé par le fait que la collerette (11) porte une fente (18) radiale à bords convergents de réception d'un ergot (2) formé sur la languette (21) d'une agrafe en contact de ladite collerette (11).

2 / Dispositif selon la revendication 1, caractérisé par le fait que l'ergot (20) est réalisé par découpage poinçonnage d'une languette de l'agrafe, et prend appui contre les bords (19) de la fente radiale.

3 / Dispositif selon l'une quelconque des revendications 1 ou 2, caractérisé par le fait que la fente (18) débouche à la périphérie de la collerette radiale du support du roulement dans le but de permettre le montage radial de l'agrafe.

FIG 1

FIG 2

FIG 4

FIG 5

FIG 3

FIG 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 346 600 (S.K.F.) <br> * Page 3, lignes 32-40; figures 1,2 * <br> --- | 1 | F 16 D 23/14 |
| A,D | FR-A-2 470 898 (S.N.R.) <br> * Page 4, lignes 29-36; figure 4 * <br> --- | 1 | |
| A | FR-A-2 459 906 (S.K.F.) <br> ----- | | |

**DOMAINES TECHNIQUES RECHERCHES (Int. Cl.5)**

F 16 D

Le présent rapport a été établi pour toutes les revendications

| Lieu de la recherche | Date d'achèvement de la recherche | Examinateur |
|---|---|---|
| LA HAYE | 31-05-1990 | BEGUIN C.P. |